(19) Europäisches Patentamt
European Patent Office
Office européen des brevets

(11) EP 4 163 074 A1

(12) EUROPEAN PATENT APPLICATION
published in accordance with Art. 153(4) EPC

(43) Date of publication:
12.04.2023  Bulletin 2023/15

(21) Application number: 21816830.0

(22) Date of filing: 02.06.2021

(51) International Patent Classification (IPC):
B29B 11/16 (2006.01)    B32B 5/02 (2006.01)
C08J 5/04 (2006.01)    B29C 70/16 (2006.01)
B29C 70/40 (2006.01)

(52) Cooperative Patent Classification (CPC):
B29B 11/16; B29C 70/16; B29C 70/40; B32B 5/02;
C08J 5/04

(86) International application number:
PCT/JP2021/021103

(87) International publication number:
WO 2021/246465 (09.12.2021 Gazette 2021/49)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority:  03.06.2020  JP 2020096946

(71) Applicant: Toray Industries, Inc.
Tokyo 103-8666 (JP)

(72) Inventors:
• SUZUKI Takafumi
  Nagoya-shi, Aichi 455-8502 (JP)
• HONMA Masato
  Iyo-gun, Ehime 791-3193 (JP)

(74) Representative: Mewburn Ellis LLP
Aurora Building
Counterslip
Bristol BS1 6BX (GB)

(54) **FIBER-REINFORCED PLASTIC AND METHOD FOR PRODUCING SAME**

(57)    The present invention relates to a fiber-reinforced plastic that includes a reinforcing fiber group, a thermosetting resin layer, and a thermoplastic resin containing a first thermoplastic resin, wherein the fiber-reinforced plastic has the thermoplastic resin layer as the surface layer of the fiber-reinforced plastic, the interface between the thermoplastic resin layer and the thermosetting resin layer is located inside the reinforcing fiber group, and the thermosetting resin layer has a sea-island structure in which an island phase having a second thermoplastic resin or a rubbery polymer as the main component is dispersed in a sea phase having a thermosetting resin as the main component.

FIG. 1

EP 4 163 074 A1

Processed by Luminess, 75001 PARIS (FR)

**Description**

TECHNICAL FIELD

The present invention relates to a fiber-reinforced plastic and a method for manufacturing the same.

BACKGROUND ART

Fiber-reinforced plastics, which are obtained by combining a thermosetting resin used as a matrix resin with a reinforcing fiber such as carbon fiber and glass fiber, are lightweight, and at the same time are excellent in mechanical properties such as strength and rigidity, heat resistance and corrosion resistance. Therefore, the fiber-reinforced plastics are used in various fields such as aerospace, automobiles, railroad vehicles, ships, civil engineering and construction, and sporting goods.

However, the fiber-reinforced plastics are not suitable for manufacturing parts or molded products having complex shapes in a single molding step, and in the above use applications, it is necessary to manufacture a member made of the fiber-reinforced plastic and then integrate the member with another member by joining, fastening, or the like.

For example, as a technique for integrating fiber-reinforced plastics with members of the same or different types, mechanical joining methods by bolts, rivets, screws, or the like, and joining methods using adhesives are used. In the mechanical joining methods, since a hole is formed in the fiber-reinforced plastic and another member, there is a problem that strength of the hole is reduced. In the case where an adhesive is interposed, there is a problem that joining and adhesion failure occurs due to peeling or the like at an interface between the fiber-reinforced plastic molded product and another member. There is also a problem in these joining methods that processability deteriorates since a step of pre-processing a joint portion, such as a hole-drilling step or an adhesive application step, is required.

Therefore, providing a thermoplastic resin on a surface of a fiber-reinforced plastic is proposed as a method for joining the fiber-reinforced plastic to another member without making a hole or using an adhesive to be interposed.

Patent Literature 1 discloses a laminate in which a thermoplastic resin layer disposed on a surface and a thermosetting resin layer as a matrix resin of a fiber-reinforced plastic, each having a rugged shape, are integrated, and a method for manufacturing the laminate. Since the thermoplastic resin layer and the thermosetting resin layer each having a rugged shape are integrated with each other, the two layers are strongly joint. Furthermore, it is described that by disposing the thermoplastic resin layer on the surface, it is possible to melt the thermoplastic resin layer to join another adherend to the fiber-reinforced plastic.

Patent Literature 2 discloses a laminate in which an adhesive resin layer containing a thermosetting resin and a thermoplastic resin present as a continuous phase is provided between an adherend layer and a thermosetting resin layer that is a matrix resin of a fiber-reinforced plastic, and a method for manufacturing the laminate. The thermoplastic resin present as a continuous phase in the adhesive resin layer acts as an anchor to firmly join the thermoplastic resin in the adhesive resin layer to the thermosetting resin. Furthermore, it is described that the joining strength between the adherend and the fiber-reinforced plastic can be improved by melting the thermoplastic resin contained in the adhesive resin layer.

CITATION LIST

PATENT LITERATURE

Patent Literature 1: WO2004/060658
Patent Literature 2: JP2006-198784A

SUMMARY OF INVENTION

TECHNICAL PROBLEM

The laminates in Patent Literature 1 and Patent Literature 2 have high processability since they do not require drilling or adhesives, can effectively utilize properties such as strength and rigidity of the fiber-reinforced plastic, and have simple joining steps. However, in order to expand an application range as a product, it is necessary not only to aim for further improvement in joining strength to the adherend, but also to increase reliability of the joining structure. In Patent Literature 1, although the composite structure of the reinforcing fibers and the thermoplastic resin exhibits high toughness, there is a concern that cracks may occur due to stress concentration on the thermosetting resin having poor toughness. In Patent Literature 2, while the thermoplastic resin exists as a continuous phase in the thermosetting resin having poor toughness, there may be a concern of peeling off due to stress concentration at an interface between the two resins.

An object of the present invention is to provide a fiber-reinforced plastic that not only can be joined to another adherend with excellent joining strength but also can appeal high reliability of a joining structure.

SOLUTION TO PROBLEM

As a result of extensive studies, the inventors of the present invention found that the above problems can be solved, and they completed the present invention. That is, the present invention is as follows.

[1] A fiber-reinforced plastic, including: a reinforcing fiber group; a thermosetting resin layer; and a thermoplastic resin layer containing a first thermoplastic resin, in which

the thermoplastic resin layer is provided as a surface layer of the fiber-reinforced plastic,
an interface between the thermoplastic resin layer and the thermosetting resin layer is positioned inside the reinforcing fiber group, and
the thermosetting resin layer has a sea-island structure in which an island phase, which contains a second thermoplastic resin or a rubbery polymer as a main component, is dispersed in a sea phase, which contains a thermosetting resin as a main component.

[2] The fiber-reinforced plastic according to [1], in which the second thermoplastic resin is the same type of resin as the first thermoplastic resin.

[3] The fiber-reinforced plastic according to [2], in which the second thermoplastic resin is the same resin as the first thermoplastic resin.

[4] The fiber-reinforced plastic according to [1] or [2], in which the second thermoplastic resin or the rubbery polymer has a melting point higher than a melting point of the first thermoplastic resin.

[5] The fiber-reinforced plastic according to any one of [1] to [4], in which the island phase contains a component of the thermosetting resin of the sea phase.

[6] The fiber-reinforced plastic according to any one of [1] to [5], in which the island phase is unevenly distributed near the interface between the thermosetting resin layer and the thermoplastic resin layer.

[7] The fiber-reinforced plastic according to [1] to [6], in which in a range of 100 $\mu$m in a thickness direction from an outermost fiber toward the thermosetting resin layer side in a thickness direction cross section, a volume ratio of the island phase is 1 volume% or more with respect to 100 volume% of the range.

[8] The fiber-reinforced plastic according to any one of [1] to [7], in which the island phase in a thickness direction cross section has an average particle diameter of 0.1 $\mu$m or more and 10 $\mu$m or less.

[9] The fiber-reinforced plastic according to any one of [1] to [8], in which the island phase has a major axis length of 3 $\mu$m or more and 30 $\mu$m or less.

[10] The fiber-reinforced plastic according to any one of [1] to [9], in which the island phase has an elastic modulus lower than an elastic modulus of the sea phase.

[11] The fiber-reinforced plastic according to any one of [1] to [10], in which the island phase has a glass transition temperature lower than a glass transition temperature of the sea phase.

[12] The fiber-reinforced plastic according to any one of [1] to [11], in which a reinforcing fiber having a surface free energy of 10 mJ/m$^2$ to 50 mJ/m$^2$ as measured by the Wilhelmy method is used as the reinforcing fibers.

[13] A method for manufacturing the fiber-reinforced plastic according to any one of [1] to [12], including:

a step of impregnating a precursor of the island phase and a precursor of the thermosetting resin layer with both surfaces of a reinforcing fiber sheet constituting the reinforcing fiber group, to form the island phase and the thermosetting resin layer;
a step of softening or melting the precursor of the island phase and a precursor of the thermoplastic resin layer, and providing them on at least one surface of the reinforcing fiber sheet on which the island phase and the thermosetting resin layer are formed, to form the island phase and the thermoplastic resin layer to form an intermediate; and
a step of molding the obtained intermediate.

[14] A method for manufacturing the fiber-reinforced plastic according to any one of [1] to [12], including:

a step of impregnating a precursor of the island phase and a precursor of the thermosetting resin layer with both surfaces of a reinforcing fiber sheet constituting the reinforcing fiber group, to form the island phase and the thermosetting resin layer;

a step of softening or melting a precursor of the thermoplastic resin layer, and providing it on at least one surface of the reinforcing fiber sheet on which the island phase and the thermosetting resin layer are formed, to form the thermoplastic resin layer to form an intermediate; and

a step of molding the obtained intermediate.

[15] A method for manufacturing the fiber-reinforced plastic according to any one of [1] to [12], including:

a step of impregnating a precursor of the thermosetting resin layer with both surfaces of a reinforcing fiber sheet constituting the reinforcing fiber group to form the thermosetting resin layer;

a step of softening or melting a precursor of the island phase and a precursor of the thermoplastic resin layer, and providing them on at least one surface of the reinforcing fiber sheet on which the thermosetting resin layer is formed, to form the island phase and the thermoplastic resin layer to form an intermediate; and

a step of molding the obtained intermediate.

[16] A method for manufacturing the fiber-reinforced plastic according to any one of [1] to [12], including:

a step of impregnating a precursor of the thermoplastic resin layer with one surface of a reinforcing fiber sheet constituting the reinforcing fiber group, to form the thermoplastic resin layer, and applying vibration to disperse the precursor of the thermoplastic resin layer in the reinforcing fiber sheet;

a step of impregnating a precursor of the thermosetting resin layer with the other surface of the reinforcing fiber sheet, to form an intermediate; and

a step of molding the obtained intermediate.

ADVANTAGEOUS EFFECTS OF INVENTION

According to the present invention, a fiber-reinforced plastic that not only can be joined to another adherend with excellent joining strength but also can appeal high reliability of a joining structure can be obtained.

BRIEF DESCRIPTION OF DRAWINGS

[FIG. 1] FIG. 1 is a schematic diagram illustrating one embodiment of a fiber-reinforced plastic of the present invention.
[FIG. 2] FIG. 2 is a schematic diagram of a cross section perpendicular to a plane of a fiber-reinforced plastic according to the present invention, which helps to explain measurement of a volume ratio of an island phase in the fiber-reinforced plastic.

DESCRIPTION OF EMBODIMENTS

The present invention will be described below with appropriate reference to the drawings, but the drawings are used to facilitate understanding of the present invention and are not intended to limit the present invention.

<Fiber-reinforced Plastic>

[Constitution of Fiber-reinforced Plastic]

A fiber-reinforced plastic according to an embodiment of the present invention includes a reinforcing fiber group, a thermosetting resin layer, and a thermoplastic resin layer containing a first thermoplastic resin, in which

the thermoplastic resin layer is provided as a surface layer of the fiber-reinforced plastic,
an interface between the thermoplastic resin layer and the thermosetting resin layer is positioned inside the reinforcing fiber group, and
the thermosetting resin layer has a sea-island structure in which an island phase, which contains a second thermoplastic resin or a rubbery polymer as a main component, is dispersed in a sea phase, which contains a thermosetting resin as a main component.

The fiber-reinforced plastic according to the embodiment of the present invention can form an integrated product having excellent joining strength by heat welding with high processability when being joined with a member the same as or different from the fiber-reinforced plastic, without making a hole on the fiber-reinforced plastic to implement fastening or without using an adhesive to be interposed.

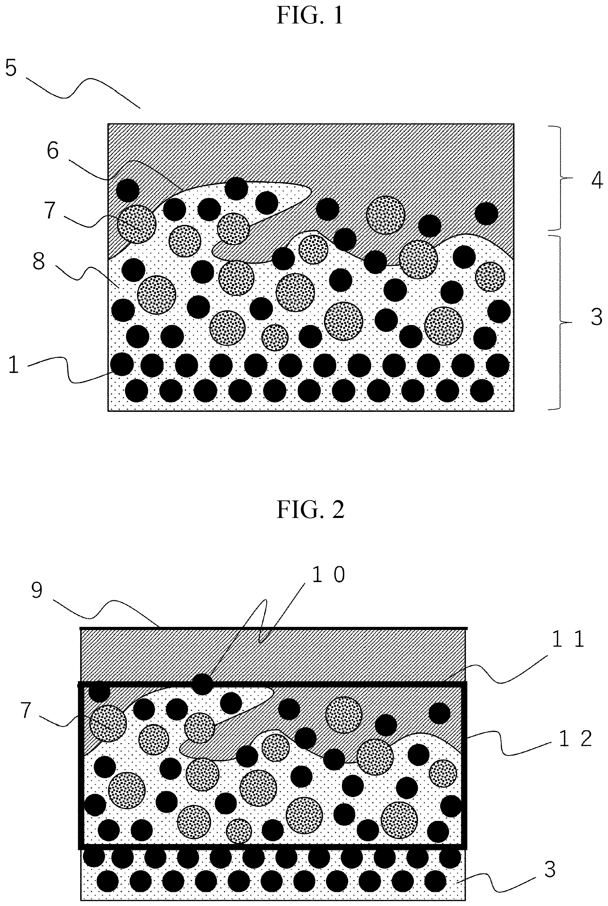

For example, as illustrated in FIG. 1, a fiber-reinforced plastic 5 according to the embodiment of the present invention includes a reinforcing fiber group containing reinforcing fibers 1, a thermosetting resin layer 3, and a thermoplastic resin layer 4, in which the thermoplastic resin layer 4 is a surface layer of the fiber-reinforced plastic, an interface 6 between the thermoplastic resin layer 4 and the thermosetting resin layer 3 is positioned inside the reinforcing fiber group, and the thermosetting resin layer 3 has a sea-island structure in which an island phase 7, which contains a thermoplastic resin or a rubbery polymer as a main component, is dispersed in a sea phase 8, which contains a thermosetting resin as a main component.

Since the thermosetting resin layer 3 has the sea-island structure, in which the island phase 7, which contains a thermoplastic resin or a rubbery polymer as a main component, is dispersed in the sea phase 8, which contains a thermosetting resin as a main component, toughness of the thermosetting resin layer 3 is increased. Therefore, not only the joining strength is improved, but also reliability of the joining structure can be appealed, from the viewpoint of preventing generation and propagation of cracks.

In the embodiment of the present invention, it is necessary that the interface between the thermoplastic resin layer 4 and the thermosetting resin layer 3 is positioned inside the reinforcing fiber group. As a result, the thermosetting resin layer 3 and the thermoplastic resin layer 4 can be strongly joined to each other, and the reliability of the joining structure can be appealed from the viewpoint of preventing separation of the two layers. Furthermore, it is preferable from the viewpoint of joining the thermosetting resin layer 3 and the thermoplastic resin layer 4 more strongly that at the interface 6 between the thermosetting resin layer 3 and the thermoplastic resin layer 4, a part of the reinforcing fiber group is chemically and/or physically bound to both the thermosetting resin layer 3 and the thermoplastic resin layer 4.

In the embodiment of the present invention, from the viewpoint of not significantly impairing properties of the thermosetting resin layer and efficiently increasing toughness of the thermosetting resin in the vicinity of the thermoplastic resin layer where stress is concentrated, it is preferable that the island phase 7 is unevenly distributed near the interface 6 between the thermosetting resin layer 3 and the thermoplastic resin layer 4.

Specifically, a distance between the interface 6 and the island phase 7 is preferably 100 $\mu$m or less, more preferably 70 $\mu$m or less, and still more preferably 50 $\mu$m or less.

Here, the distance between the interface 6 between the thermosetting resin layer 3 and the thermoplastic resin layer 4 and the island phase 7 is an average value of 10 measurements of a shortest distance between the interface 6 between the thermosetting resin layer 3 and the thermoplastic resin layer 4 and an outer periphery of the cross section of randomly selected island phase 7. The shortest distance can be measured by, for example, a known method of observing a cross section perpendicular to a fiber direction of the fiber-reinforced plastic. Examples of the method include a method of measuring from a cross-sectional image acquired by using an X-ray CT, a method of measuring from an elemental analysis mapping image by an energy dispersive X-ray spectrometer (EDS), and a method of measuring from a cross-sectional observation image by an optical microscope, scanning electron microscope (SEM), or transmission electron microscope (TEM).

The island phase containing a second thermoplastic resin or a rubbery polymer as a main component may exist in both the thermosetting resin layer and the thermoplastic resin layer, or may exist only in the thermosetting resin layer. The island phase containing a second thermoplastic resin or a rubbery polymer as a main component preferably exists in both the thermosetting resin layer and the thermoplastic resin layer in the vicinity of the interface between the thermosetting resin layer and the thermoplastic resin layer from the viewpoint of improving the joining strength of fiber-reinforced plastic, and preferably exists only in the thermosetting resin layer from the viewpoint of processability.

Here, the second thermoplastic resin is preferably the same type of resin, and more preferably the same thermoplastic resin, as the first thermoplastic resin, from the viewpoint of being able to be processed at the same process temperature.

In the present invention, "the same type" means that the main components excluding additives and the like are the same. Moreover, "having the same main component" means having the same main skeleton, and includes those having different numbers of repeating units and terminal treatments. Examples of a method for analyzing an island phase containing a thermoplastic resin as a main component or an island phase containing a rubbery polymer as a main component and the thermoplastic resin layer include a method of analyzing from the glass transition temperature by a differential scanning calorimeter (DSC), a method of analyzing from an elemental analysis mapping image by an energy dispersive type X-ray spectrometer (EDS), and a method of analyzing from an elastic modulus by a nanoindentation method.

Alternatively, the second thermoplastic resin or the rubbery polymer preferably has a melting point higher than that of the first thermoplastic resin from the viewpoint of preventing structural changes at a process temperature. The melting points of the second thermoplastic resin and the rubbery polymer are preferably higher than the melting point of the first thermoplastic resin.

Here, an average particle diameter of the island phase is preferably 0.1 $\mu$m or more and 10 $\mu$m or less, more preferably 0.3 $\mu$m or more and 5 $\mu$m or less, and still more preferably 0.5 $\mu$m or more and 3 $\mu$m or less, from the viewpoint of preventing disorder of alignment of the reinforcing fibers. Particularly, in the case where high quality is required, it is desirable to align the reinforcing fibers.

A major axis length of the island phase containing a second thermoplastic resin or a rubbery polymer as a main component is preferably 3 $\mu$m or more and 30 $\mu$m or less, more preferably 5 $\mu$m or more and 25 $\mu$m or less, and still more preferably 5 $\mu$m or more and 20 $\mu$m or less, from the viewpoint of increasing toughness of the thermosetting resin. It is preferable that the major axis of the island phase is present along the reinforcing fibers so that the disorder of alignment of the reinforcing fibers can be prevented.

The average particle diameter and the major axis length of the island phase can be confirmed by, for example, observing a cross section perpendicular to the fiber direction of the fiber-reinforced plastic with an optical microscope. The average particle diameter can be calculated from diameters of circles that roughly represent outlines of at least 20 randomly selected island phases observed in a cross-section perpendicular to the reinforcing fibers. It can be measured by taking the maximum length of the island phase in the observed cross section as the major axis length of the island phase. Note that the major axis of the island phase is calculated from a line segment passing through the two most distant points on an outer circumference of the island phase among straight lines passing through an inside of the island phase confirmed in the cross-sectional observation image.

In a range of 100 $\mu$m in a thickness direction from an outermost fiber toward the thermosetting resin layer side in a thickness direction cross section of the fiber-reinforced plastic, a volume ratio of the island phase may be 0.1 volume% or more with respect to 100 volume% of the range, and from the viewpoint of further increasing the toughness of the thermosetting resin, the volume ratio is preferably 1 volume% or more, and more preferably 10 volume% or more. An upper limit of the volume ratio may be in a range that does not significantly impair mechanical properties of the thermosetting resin, and is preferably 95 volume% or less, and more preferably 80 volume% or less.

Here, in order to help to explain measurement of the volume ratio of the island phase, a schematic diagram of a cross section perpendicular to the plane of the fiber-reinforced plastic is illustrated in FIG. 2. In the cross section perpendicular to the fiber direction of the fiber-reinforced plastic, a fiber closest to a surface 9 of the fiber-reinforced plastic is taken as an outermost fiber 10, and in a measurement range 12 of 100 $\mu$m in the thickness direction from a reference line 11 that passes through a center of the outermost fiber 10 and is horizontal to the surface of the fiber-reinforced plastic toward the thermosetting resin layer 3 side, the volume% of the island phase 7 is calculated.

[Interface between Thermosetting Resin Layer and Thermoplastic Resin Layer]

In the fiber-reinforced plastic, the interface between the thermosetting resin layer and the thermoplastic resin layer is positioned inside the reinforcing fiber group.

A shape of the interface is preferably an uneven shape from the viewpoint of further increasing mechanical bonding strength. As a result, the integrated product in which the fiber-reinforced plastic according to the embodiment of the present invention and another structural member are bonded via the thermoplastic resin layer has excellent joining strength. A method for confirming the uneven shape of the interface is not particularly limited, and can be confirmed by observing a cross section perpendicular to the fiber direction of the fiber-reinforced plastic.

Here, a known method can be used as the method for confirming the uneven shape of the interface. Examples of the method include a method of confirming from a cross-sectional image acquired by using an X-ray CT, a method of confirming from an elemental analysis mapping image by an energy dispersive X-ray spectrometer (EDS), and a method of confirming from a cross-sectional observation image by an optical microscope, scanning electron microscope (SEM), or transmission electron microscope (TEM). In observation, the thermosetting resin layer and/or the thermoplastic resin layer may be dyed to adjust a contrast.

In the fiber-reinforced plastic according to the embodiment of the present invention, an impregnation ratio of the thermosetting resin and the thermoplastic resin (hereinafter the thermosetting resin and the thermoplastic resin may simply and collectively be referred to as resin) to the reinforcing fiber group is preferably 80% or more. The impregnation ratio is more preferably 85% or more, and still more preferably 90% or more.

Here, the impregnation ratio is a ratio of how much the resin is impregnated in the reinforcing fiber group constituting the fiber-reinforced plastic. The impregnation ratio can be obtained by measuring a ratio of portions of the resin not impregnated by a specific method. A higher impregnation ratio means fewer voids contained in the fiber-reinforced plastic, and a higher impregnation ratio is preferable from the viewpoint of further improving surface appearance and mechanical properties.

Examples of the method for measuring the impregnation ratio include a method of obtaining the impregnation ratio by the following Equation (1), when a total cross-sectional area of the fiber-reinforced plastic including the voids in the fiber-reinforced plastic is denoted as A0 and a cross-sectional area of the voids is denoted as A1 in observation of the cross section perpendicular to the fiber direction of the fiber-reinforced plastic.

$$\text{Impregnation ratio (\%)} = (A0 - A1) \times 100/A0 \qquad (1)$$

Details of each element constituting the fiber-reinforced plastic of the present invention will be described below.

[Thermosetting Resin Layer]

The thermosetting resin layer has a sea-island structure in which an island phase, which contains a second thermoplastic resin or a rubbery polymer as a main component, is dispersed in a sea phase, which contains a thermosetting resin as a main component. The interface between the thermoplastic resin layer and the thermosetting resin layer is positioned inside the reinforcing fiber group.
The thermosetting resin layer can be constituted by a reinforcing fiber group and a thermosetting resin.
Details of the reinforcing fiber group and a thermosetting resin composition will be explained.

(Reinforcing Fiber Group)

The reinforcing fiber group is an assembly (fiber bundle) of the reinforcing fibers, and may be either continuous fibers or discontinuous fibers, and can be appropriately selected from a unidirectionally arranged form, a lamination form thereof, a woven form, and the like. From the viewpoint of obtaining a lightweight and highly durable fiber-reinforced plastic, it is preferable that the reinforcing fibers are unidirectionally arranged continuous fibers or a woven fabric.
Such a fiber bundle may be made of the same reinforcing fibers or may be made of different reinforcing fibers. The number of fibers constituting the reinforcing fiber bundle is not particularly limited, and can be exemplified as 300 to 60,000, and from the viewpoint of productivity, the number is preferably 300 to 48,000, and more preferably 1,000 to 24,000.
A type of the reinforcing fibers that constitute the reinforcing fiber group is not particularly limited, and examples thereof include carbon fibers, glass fibers, aramid fibers, alumina fibers, silicon carbide fibers, boron fibers, metal fibers, natural fibers, and mineral fibers, in which these fibers may be used singly or in combination of two or more. Among them, from the viewpoint of improving specific strength and specific rigidity and reducing weight, carbon fibers such as polyacrylonitrile (PAN), pitch, and rayon fibers are preferably used. From the viewpoint of improving economic efficiency of the obtained fiber-reinforced plastic, glass fibers can be preferably used, and it is particularly preferable to use carbon fibers and glass fibers together from the viewpoint of balance between mechanical properties and economic efficiency. Furthermore, aramid fibers can be preferably used from the viewpoint of improving impact absorption and formability of the obtained fiber-reinforced plastic, and it is particularly preferable to use carbon fibers and aramid fibers in combination from the viewpoint of balance between mechanical properties and impact absorption. From the viewpoint of improving conductivity of the obtained fiber-reinforced plastic, reinforcing fibers coated with metal such as nickel, copper, or ytterbium, or pitch-based carbon fibers may be used.
The reinforcing fibers constituting the reinforcing fiber group are preferably surface-treated with a sizing agent from the viewpoint of improving mechanical properties. Examples of the sizing agent include polyfunctional epoxy resins, urethane resins, acrylic acid polymers, polyhydric alcohols, polyethyleneimine, and ethylene oxide adducts of aliphatic alcohols. Specifically, examples thereof include polyglycidyl ether of aliphatic polyhydric alcohols such as glycerol triglycidyl ether, diglycerol polyglycidyl ether, polyglycerol polyglycidyl ether, sorbitol polyglycidyl ether, arabitol polyglycidyl ether, trimethylolpropane triglycidyl ether, and pentaerythritol polyglycidyl ether; polyacrylic acid, a copolymer of acrylic acid and methacrylic acid, a copolymer of acrylic acid and maleic acid, and a mixture of two or more of these; polyvinyl alcohol; glycerol; diglycerol; polyglycerol; sorbitol; arabitol; trimethylolpropane; pentaerythritol; polyethyleneimine containing more amino groups in one molecule; and polyoxyethylene oleyl ether. Among these, glycerol triglycidyl ether, diglycerol polyglycidyl ether, and polyglycerol polyglycidyl ether are preferably used since they contain many highly reactive epoxy groups in one molecule, have high water solubility, and are easy to apply.
The reinforcing fiber having a surface free energy of 10 mJ/m$^2$ to 50 mJ/m$^2$ as measured by the Wilhelmy method is preferably used. By controlling the surface free energy within this range, the compatibility with the thermosetting resin layer and the thermoplastic resin layer is enhanced, aggregation among the reinforcing fibers is prevented, and dispersed state within each layer is improved. As a result, flowing of resin in the layers is promoted, so that formation of the dispersed phase of the thermoplastic resin in the thermosetting resin is promoted. The reinforcing fibers exhibit high affinity with the thermosetting resin layer and the thermoplastic resin layer, and exhibit high joining strength at the interface between the thermosetting resin and the thermoplastic resin where the reinforcing fibers straddle. The surface free energy of the reinforcing fiber is preferably 15 mJ/m$^2$ to 40 mJ/m$^2$, and more preferably 18 mJ/m$^2$ to 35 mJ/m$^2$.
Examples of a method for controlling the surface free energy of the reinforcing fibers include a method of oxidizing the surface to adjust the amount of oxygen-containing functional groups such as carboxyl groups and hydroxyl groups, and a method of attaching a single or a plurality of compounds to the surface. In the case where a plurality of compounds is attached to the surface, those having a high surface free energy and those having a low surface free energy may be mixed and attached. A method for calculating the surface free energy of the reinforcing fibers will be described below. The surface free energy can be calculated by a method of measuring contact angles of the reinforcing fibers with respect to three solvents (purified water, ethylene glycol, tricresyl phosphate) and then calculating the surface free energy by using the Owens equation for approximation. A procedure thereof is described below, but the measuring equipment and detailed method are not necessarily limited to the followings.

Using DCAT 11 manufactured by Data Physics, first, one single fiber is taken out from the reinforcing fiber bundle, cut into eight pieces with a length of 12 $\pm$ 2 mm, and then attached in parallel with each other to a dedicated holder FH12 (a flat plate coated with an adhesive substance on a surface thereof) with an interval of 2 mm to 3 mm between each two single fibers. Then, ends of the single fibers are trimmed and set on DCAT11 of the holder. In the measurement, a cell containing each solvent is brought close to lower ends of the eight single fibers at a speed of 0.2 mm/s, and the single fibers are immersed up to 5 mm from tips thereof. Then, the single fibers are pulled up at a speed of 0.2 mm/s. This operation is repeated four times or more. A force F applied to each single fiber while immersed in the liquid is measured by using an electronic balance. Using this value, a contact angle $\theta$ is calculated by the following equation.

$$\cos \theta = (\text{force F (mN) applied to eight single fibers})/(8 \text{ (number of single fibers)} \times$$
$$\text{circumference (m) of single fiber} \times \text{surface tension of solvent (mJ/m}^2))$$

The measurement is performed on single fibers extracted from three different positions of the reinforcing fiber bundle. That is, an average value of contact angles for a total of 24 single fibers is obtained for one reinforcing fiber bundle.

A surface free energy $\gamma_f$ of the reinforcing fiber is calculated as the sum of a polar component $\gamma^p_f$ of the surface free energy, and a non-polar component $\gamma^d_f$ of the surface free energy.

The polar component $\gamma^p_f$ of the surface free energy is obtained by substituting a surface tension component and the contact angle of each liquid into the Owens equation for approximation shown in the following equation (an equation including polar and non-polar components of the surface tension inherent in each solvent and the contact angle $\theta$), plotting on X and Y, and squaring a slope a when linearly approximated by the least square method. The non-polar component $\gamma^d_f$ of the surface free energy is obtained by squaring an intercept b. The surface free energy $\gamma_f$ of the reinforcing fiber is the sum of a square of the slope a and a square of the intercept b.

$$Y = a \cdot X + b$$

X = $\sqrt{}$(polar component (mJ/m$^2$) of surface tension of solvent)/$\sqrt{}$(non-polar component (mJ/m$^2$) of surface tension of solvent)

Y = (1 + cos $\theta$)·(polar component (mJ/m$^2$) of surface tension of solvent)/2$\sqrt{}$(non-polar component (mJ/m$^2$) of surface tension of solvent)

Polar component $\gamma^p_f$ of surface free energy of reinforcing fiber = a$^2$

Non-polar component $\gamma^d_f$ of surface free energy of reinforcing fiber = b$^2$

Total surface free energy $\gamma_f$ = a$^2$ + b$^2$.

The polar and non-polar components of the surface tension of each solvent are as follows.

·Purified water
Surface tension 72.8 mJ/m$^2$, polar component 51.0 mJ/m$^2$, non-polar component 21.8 (mJ/m$^2$)
·Ethylene glycol
Surface tension 48.0 mJ/m$^2$, polar component 19.0 mJ/m$^2$, non-polar component 29.0 (mJ/m$^2$)
·Tricresol phosphate
Surface tension 40.9 mJ/m$^2$, polar component 1.7 mJ/m$^2$, non-polar component 39.2 (mJ/m$^2$).

The reinforcing fiber bundle preferably has a strand tensile strength of 3.5 GPa or more as measured according to a resin-impregnated strand test method of JIS R7608 (2007), since a reinforced plastic having excellent joining strength in addition to tensile strength can be obtained, and the strand tensile strength is more preferably 4.0 GPa or more. The joining strength referred to here refers to a tensile shear joining strength determined according to ISO 4587 (1995).

A mass content of the reinforcing fibers constituting the reinforcing fiber group in the fiber-reinforced plastic is preferably 30 mass% to 90 mass%, more preferably 35 mass% to 85 mass%, and still more preferably 40 mass% to 80 mass%. In the case where the mass content of the reinforcing fibers is within the preferred ranges, a fiber-reinforced plastic with superior specific strength and specific elastic modulus can be obtained.

A volume of the reinforcing fibers contained in the thermosetting resin layer is preferably 50% to 99%, and more preferably 75% to 95%, of a total volume of the reinforcing fibers contained in the entire fiber-reinforced plastic, from the viewpoint of balance between the mechanical properties of the fiber-reinforced plastic and weldability with a second member.

Examples of a method for measuring the amount of the reinforcing fibers in the thermosetting resin layer include a method of obtaining the ratio [%] by performing segmentation analysis on an X-ray CT image of a small piece of a fiber-reinforced plastic and then dividing a volume of the reinforcing fibers present in the thermosetting resin layer by a total volume of the reinforcing fibers contained in the small piece, and a method of obtaining the ratio [%] by dividing an area of the reinforcing fibers present in the thermosetting resin layer by an area of the reinforcing fibers contained in the entire small piece in a cross-sectional observation photograph of the small piece obtained by an optical microscope, a scanning electron microscope (SEM), or a transmission electron microscope (TEM). In observation, the thermosetting resin layer and/or the thermoplastic resin layer may be dyed to adjust a contrast.

(Thermosetting Resin Composition)

The thermosetting resin composition contains a thermosetting resin and may further contain additives and the like depending on a use of the fiber-reinforced plastic.

A type of the thermosetting resin contained in the thermosetting resin composition is not particularly limited, and examples thereof include unsaturated polyester resins, vinyl ester resins, epoxy resins, phenol resins, urea resins, melamine resins, polyimide resins, cyanate ester resins, bismaleimide resins, benzoxazine resins, and copolymers or modified products thereof, and resins in which at least two of these resins are blended. An elastomer or rubber component may be added to the thermosetting resin to improve impact resistance. Among these resins, epoxy resins are preferable because of their excellent mechanical properties, heat resistance, and adhesiveness to reinforcing fibers.

Examples of a main agent of the epoxy resins can include bisphenol epoxy resins such as bisphenol A epoxy resin, bisphenol F epoxy resin, bisphenol AD epoxy resin, and bisphenol S epoxy resin, brominated epoxy resins such as tetrabromobisphenol A diglycidyl ether, epoxy resins having a biphenyl skeleton, epoxy resins having a naphthalene skeleton, epoxy resins having a dicyclopentadiene skeleton, novolak epoxy resins such as phenol novolak epoxy resins and cresol novolak epoxy resins, glycidylamine epoxy resins such as N,N,O-triglycidyl-m-aminophenol, N,N,O-triglycidyl-p-aminophenol, N,N,O-triglycidyl-4-amino-3-methylphenol, N,N,N',N'-tetraglycidyl-4,4'-methylenedianiline, N,N,N',N'-tetraglycidyl-2,2'-diethyl-4,4'-methylenedianiline, N,N,N',N'-tetraglycidyl-m-xylylenediamine, N,N-diglycidylaniline, and N,N-diglycidyl-o-toluidine, resorcinol diglycidyl ether, and triglycidyl isocyanurate.

The thermosetting resin composition may contain a curing agent. Examples of the curing agent include dicyandiamide, aromatic amine compounds, phenol novolak resins, cresol novolak resins, polyphenol compounds, imidazole derivatives, tetramethylguanidine, thiourea-added amines, carboxylic acid hydrazides, carboxylic acid amide, and polymercaptan.

These curing agents are preferably 0.8 to 1.2 equivalents of the number of reactive functional groups in the thermosetting resin.

Furthermore, depending on a use of the fiber-reinforced plastic, the thermosetting resin composition may be added with fillers such as mica, talc, kaolin, hydrotalcite, sericite, bentonite, xonotlite, sepiolite, smectite, montmorillonite, wollastonite, silica, calcium carbonate, glass beads, glass flakes, glass microballoons, clay, molybdenum disulfide, titanium oxide, zinc oxide, antimony oxide, calcium polyphosphate, graphite, barium sulfate, magnesium sulfate, zinc borate, calcium borate, aluminum borate whiskers, potassium titanate whiskers, and polymeric compounds; conductivity-enhancing agents such as metals, metal oxides, carbon black, and graphite powder; halogenated flame retardants such as brominated resins; antimony-based flame retardants such as antimony trioxide and antimony pentoxide; phosphorus-based flame retardants such as ammonium polyphosphate, aromatic phosphates, and red phosphorus; organic acid metal salt-based flame retardants such as metal borate, metal carboxylate, and aromatic sulfonimide metal salt; inorganic flame retardants such as zinc borate, zinc, zinc oxide, and zirconium compounds; nitrogen-based flame retardants such as cyanuric acid, isocyanuric acid, melamine, melamine cyanurate, melamine phosphate, and nitrogenated guanidine; fluorinated flame retardants such as PTFE; silicone-based flame retardants such as polyorganosiloxane; metal hydroxide-based flame retardants such as aluminum hydroxide and magnesium hydroxide; other flame retardants; flame retardant aids such as cadmium oxide, zinc oxide, cuprous oxide, cupric oxide, ferrous oxide, ferric oxide, cobalt oxide, manganese oxide, molybdenum oxide, tin oxide, and titanium oxide; pigments; dyes; lubricants; release agents; compatibilizers; dispersants; nucleating agents such as mica, talc, and kaolin; plasticizers such as phosphate esters; heat stabilizers; antioxidants; anti-coloring agents; UV absorbers; fluidity modifiers; foaming agents; antibacterial agents; damping agents;

deodorants; slidability modifiers; antistatic agents such as polyether ester amides; and the like. Particularly, in applications such as electrical and electronic equipment, automobiles, and aircraft, flame retardancy may be required, and phosphorus-based flame retardants, nitrogen-based flame retardants, and inorganic flame retardants are preferably added.

An amount of the flame retardant is preferably 1 part by mass to 20 parts by mass and more preferably 1 part by mass to 15 parts by mass, per 100 parts by mass of the resin, so as to exhibit flame retardant effect and maintain a good balance between properties of the resin used such as the mechanical properties and resin fluidity during molding.

(Second Thermoplastic Resin)

The second thermoplastic resin is not particularly limited except that it contains a thermoplastic resin as a main component, and in order to improve toughness of the thermosetting resin layer, a resin with high toughness can be preferably used. The island phase can be formed by using a thermoplastic resin composition containing a thermoplastic resin as a main component. The thermoplastic resin composition may contain additives and the like depending on a use of the fiber-reinforced plastic.

A type of the second thermoplastic resin that can be contained as a main component in the island phase is not particularly limited, and examples thereof include crystalline resins such as "polyesters such as polyethylene terephthalate (PET), polybutylene terephthalate (PBT), polytrimethylene terephthalate (PTT), polyethylene naphthalate (PEN), and liquid crystal polyesters, polyolefins such as polyethylene (PE), polypropylene (PP), and polybutylene, polyarylene sulfides such as polyoxymethylene (POM), polyamide (PA), and polyphenylene sulfide (PPS), polyketone (PK), polyetherketone (PEK), polyetheretherketone (PEEK), polyaryletherketone (PAEK), polyetherketoneketone (PEKK), polyethernitrile (PEN), and fluorinated resins such as polytetrafluoroethylene"; amorphous resins such as "polycarbonate (PC), polymethyl methacrylate (PMMA), polyvinyl chloride (PVC), polyphenylene ether (PPE), polyimide (PI), polyamideimide (PAI), polyetherimide (PEI), polysulfone (PSU), polyethersulfone, and polyarylate (PAR) in addition to styrene resins"; phenolic resins; phenoxy resins; thermoplastic elastomers of polystyrene, polyolefin, polyurethane, polyester, polyamide, polybutadiene, polyisoprene, fluorine resins, acrylonitrile, and the like; and copolymers and modified products thereof.

Among these resins, polyolefin is preferable from the viewpoint of lightweight of the obtained fiber-reinforced plastic. From the viewpoint of heat resistance, polyarylene sulfide such as polyphenylene sulfide (PPS), polyetheretherketone (PEEK), polyaryletherketone (PAEK), and polyetherketoneketone (PEKK) are preferred.

From the viewpoint of joining strength, the second thermoplastic resin preferably contains one or more resins selected from the group consisting of polyamides, polyarylates, polyamideimides, polyimides, polyetherimides, polysulfones, and polyethersulfones, as a main component. Among these, polyamides and polyimides are more preferred, and polyamides are the mostly preferred since an excellent toughness thereof can greatly improve impact resistance.

From the viewpoint of adhesion to the thermosetting resin layer, the island phase preferably contains a thermosetting resin, and more preferably contains a thermosetting resin component in the sea phase. The second thermoplastic resin preferably contains a thermosetting resin, and more preferably contains a thermosetting resin component in the sea phase. Here, the term "thermosetting resin component in the sea phase" refers to a resin component of the same type as the thermosetting resin contained in the sea phase. For example, from the viewpoint of preventing separation between the island phase and the sea phase, it is more preferable to combine the second thermoplastic resin with a thermosetting resin to form a semi-interpenetrating polymer network structure (IPN) structure. Examples of combinations forming the semi-IPN structure include a polyamide selected from polyamide 12, polyamide 6, polyamide 11, and polyamide 6/12 copolymers and an epoxy compound.

A ratio (mass%) of the second thermoplastic resin to the thermosetting resin component can be used in a range of 95:5 to 70:30, and is more preferably in a range of 90:10 to 80:20. Here, the thermosetting resin is not limited to epoxy compounds, and may be selected from unsaturated polyesters, vinyl ester resins, benzoxazine resins, phenol resins, urea resins, melamine resins, and polyimide resins. More preferably, the thermosetting resin is the same thermosetting resin component as that in the sea phase.

Furthermore, depending on a use thereof, the second thermoplastic resin may be added with fillers such as mica, talc, kaolin, hydrotalcite, sericite, bentonite, xonotlite, sepiolite, smectite, montmorillonite, wollastonite, silica, calcium carbonate, glass beads, glass flakes, glass microballoons, clay, molybdenum disulfide, titanium oxide, zinc oxide, antimony oxide, calcium polyphosphate, graphite, barium sulfate, magnesium sulfate, zinc borate, calcium borate, aluminum borate whiskers, potassium titanate whiskers, and polymeric compounds; conductivity-enhancing agents such as metals, metal oxides, carbon black, and graphite powder; halogenated flame retardants such as brominated resins; antimony-based flame retardants such as antimony trioxide and antimony pentoxide; phosphorus-based flame retardants such as ammonium polyphosphate, aromatic phosphates, and red phosphorus; organic acid metal salt-based flame retardants such as metal borate, metal carboxylate, and aromatic sulfonimide metal salt; inorganic flame retardants such as zinc borate, zinc, zinc oxide, and zirconium compounds; nitrogen-based flame retardants such as cyanuric acid, isocyanuric acid, melamine, melamine cyanurate, melamine phosphate, and nitrogenated guanidine; fluorinated flame retardants such as PTFE; silicone-based flame retardants such as polyorganosiloxane; metal hydroxide-based flame retardants such as aluminum hydroxide and magnesium hydroxide; other flame retardants; flame retardant aids such as cadmium oxide, zinc oxide, cuprous oxide, cupric oxide, ferrous oxide, ferric oxide, cobalt oxide, manganese oxide, molybdenum oxide, tin oxide, and titanium oxide; pigments; dyes; lubricants; release agents; compatibilizers; dispersants; nucleating agents such as mica, talc, and kaolin; plasticizers such as phosphate esters; heat stabilizers; antioxidants; anti-coloring agents; UV absorbers; fluidity modifiers; foaming agents; antibacterial agents; damping agents; deodorants; slidability modifiers; antistatic agents such as polyether ester amides; and the like. Particularly, in applications such as electrical and electronic equipment, automobiles, and aircraft, flame retardancy may be required, and phosphorus-based flame retardants, nitrogen-based flame retardants, and inorganic flame retardants are preferably added.

An amount of the flame retardant is preferably 1 part by mass to 20 parts by mass, and more preferably 1 part by mass to 15 parts by mass, per 100 parts by mass of the second thermoplastic resin, so as to exhibit flame retardant effect and maintain a good balance between properties of the resin used such as the mechanical properties and resin fluidity during molding.

(Shape of Island Phase Containing Second Thermoplastic Resin as Main Component)

There is no particular limitation on the shape of the island phase containing the second thermoplastic resin as a main component, as long as the island phase is dispersed in the sea phase containing a thermosetting resin as a main component to constitute a sea-island structure. The shape of the island phase may be, for example, a fiber shape or a particle shape, and is preferably a spherical shape from the viewpoint of preventing disorder of alignment of the reinforcing fibers. For example, it is more preferable that a cross-sectional shape of the island phase containing the second thermoplastic resin as a main component, observed in a cross section perpendicular to a plane of the fiber-reinforced plastic, is circular, elliptical, or substantially circular including unevenness. Among these shapes, a circular shape with few starting points of stress concentration is further preferable.

From the viewpoint of improving toughness of the thermosetting resin, an elastic modulus of the island phase containing the second thermoplastic resin as a main component is preferably lower than an elastic modulus of the sea phase containing a thermosetting resin as a main component, more preferably 70% or less, and still more preferably 50% or less, of the elastic modulus of the sea phase containing a thermosetting resin as a main component.

Examples of a method for measuring the elastic moduli of the island phase containing the second thermoplastic resin as a main component and the sea phase containing a thermosetting resin as a main component include a method of evaluating the island phase containing the second thermoplastic resin as a main component and the sea phase containing a thermosetting resin as a main component in a cross section cut out from the fiber-reinforced plastic by a nanoindentation method.

A glass transition temperature of the island phase containing the second thermoplastic resin as a main component is preferably lower than a glass transition temperature of the sea phase containing the thermosetting resin as a main component. Since the glass transition temperature of the island phase containing the second thermoplastic resin as a main component is lower than the glass transition temperature of the sea phase containing a thermosetting resin as a main component, toughness of the thermosetting resin layer can be further improved.

Examples of a method for measuring the glass transition temperatures of the island phase containing the second thermoplastic resin as a main component and the sea phase containing a thermosetting resin as a main component include a method of extracting the island phase containing the second thermoplastic resin as a main component and the sea phase containing a thermosetting resin as a main component from a cross section cut out from the fiber-reinforced plastic and evaluating the island phase and the sea phase by a differential scanning calorimeter (DSC).

(Rubbery Polymer)

The rubbery polymer is not particularly limited except that the rubbery polymer preferably contains a rubber polymer as a main component, and the rubbery polymer may contain additives and the like depending on a use thereof. The rubber polymer includes a polymer whose glass transition temperature is lower than room temperature, and is a polymer in which some of molecules are restrained to each other through covalent bonds, ionic bonds, Van der Waals forces, entanglement, or the like.

Examples of the rubbery polymer include olefinic resins, acrylic rubbers, silicone rubbers, fluoro rubbers, nitrile rubbers, vinyl rubbers, urethane rubbers, polyamide elastomers, polyester elastomers, and ionomers.

Additives that can be contained in the rubbery polymer include the additives that can be contained in the second thermoplastic resin, and preferred examples thereof are also the same.

(Shape of Rubbery Polymer Island Phase)

Examples of a shape of the island phase containing the rubbery polymer as a main component are the same as those of the island phase containing the second thermoplastic resin as a main component, and preferred examples thereof are also the same.

The elastic modulus of the island phase containing a rubbery polymer as a main component is, similar to that of the island phase containing the second thermoplastic resin as a main component, preferably lower than that of the sea phase containing a thermosetting resin as a main component, and the preferable ranges thereof are also the same.

Also similar to the island phase containing a thermoplastic resin as a main component, it is preferable that the island phase containing a rubbery polymer as a main component forms a semi-IPN structure, and the preferable ranges thereof are also the same as that in the thermoplastic resin.

[Thermoplastic Resin Layer]

The thermoplastic resin layer is not particularly limited except that it contains the first thermoplastic resin, and preferably contains the first thermoplastic resin as a main component, and may also contain additives and the like depending on a use of the fiber-reinforced plastic.

Examples of the first thermoplastic resin contained in the thermoplastic resin layer include the resins exemplified for the second thermoplastic resin, and preferable examples thereof are the same.

Examples of additives that can be contained in the first thermoplastic resin layer include the additives that can be contained in the second thermoplastic resin, and preferred examples thereof are the same.

A basis weight of the thermoplastic resin layer in the fiber-reinforced plastic is preferably 10 g/m$^2$ or more and 500 g/m$^2$ or less, and more preferably 20 g/m$^2$ or more and 200 g/m$^2$ or less, from the viewpoint of improving quality by ensuring an amount of resin suitable for welding with the second member.

Here, the basis weight refers to a mass (g) of the thermoplastic resin layer contained per 1 m$^2$ of the fiber-reinforced plastic.

In the embodiment of the present invention, the thermoplastic resin layer may present as a part of a surface layer of the fiber-reinforced plastic. The thermoplastic resin layer present on the surface layer of the fiber-reinforced plastic can be integrated with another member by welding. In a preferred embodiment, the portion of the thermoplastic resin layer can be minimized, and efficiency of the fiber-reinforced plastic with excellent mechanical properties can be increased.

<Manufacturing Method>

A method for manufacturing the fiber-reinforced plastic according to the embodiment of the present invention is not particularly limited, and examples thereof include the following manufacturing methods (I) to (IV).

Manufacturing Method (I)

A manufacturing method (I) is a method for manufacturing a fiber-reinforced plastic, including:

a step of impregnating a precursor of the island phase and a precursor of the thermosetting resin layer with both surfaces of a reinforcing fiber sheet constituting the reinforcing fiber group, to form the island phase and the thermosetting resin layer;
a step of softening or melting the precursor of the island phase and a precursor of the thermoplastic resin layer, and providing them on at least one surface of the reinforcing fiber sheet on which the island phase and the thermosetting resin layer are formed, to form the island phase and the thermoplastic resin layer to form an intermediate; and
a step of molding the obtained intermediate.

Manufacturing Method (II)

A manufacturing method (II) is a method for manufacturing a fiber-reinforced plastic, including:

a step of impregnating a precursor of the island phase and a precursor of the thermosetting resin layer with both surfaces of a reinforcing fiber sheet constituting the reinforcing fiber group, to form the island phase and the thermosetting resin layer;
a step of softening or melting a precursor of the thermoplastic resin layer, and providing it on at least one surface of the reinforcing fiber sheet on which the island phase and the thermosetting resin layer are formed, to form the thermoplastic resin layer to form an intermediate; and

a step of molding the obtained intermediate.

Manufacturing Method (III)

A manufacturing method (III) is a method for manufacturing a fiber-reinforced plastic, including:

a step of impregnating a precursor of the thermosetting resin layer with both surfaces of a reinforcing fiber sheet constituting the reinforcing fiber group to form the thermosetting resin layer;
a step of softening or melting a precursor of the island phase and a precursor of the thermoplastic resin layer, and providing them on at least one surface of the reinforcing fiber sheet on which the thermosetting resin layer is formed, to form the island phase and the thermoplastic resin layer to form an intermediate; and
a step of molding the obtained intermediate.

Manufacturing Method (IV)

A manufacturing method (IV) is a method for manufacturing a fiber-reinforced plastic, including:

a step of impregnating a precursor of the thermoplastic resin layer with one surface of a reinforcing fiber sheet constituting the reinforcing fiber group, to form the thermoplastic resin layer, and applying vibration to disperse the precursor of the thermoplastic resin layer in the reinforcing fiber sheet;
a step of impregnating a precursor of the thermosetting resin layer with the other surface of the reinforcing fiber sheet, to form an intermediate; and
a step of molding the obtained intermediate.

In the embodiment of the present invention, a method for producing the thermosetting resin layer as a layer having a sea-island structure in which an island phase, which contains the second thermoplastic resin or the rubbery polymer as a main component, is dispersed in a sea phase, which contains the thermosetting resin as a main component, is not particularly limited. Examples thereof, performed in the method for manufacturing the fiber-reinforced plastic, include the use of any of the following methods (i) to (vii). A plurality of these methods may be combined.

(i) A step of containing the precursor of the island phase in the precursor of the thermoplastic resin layer.
(ii) A step of containing the precursor of the island phase in the precursor of the thermosetting resin layer.
(iii) A step of containing the precursor of the island phase in both the precursor of the thermosetting resin layer and the precursor of the thermoplastic resin layer.
(iv) A step of applying the precursor of the island phase to at least one surface of the intermediate obtained by impregnating the precursor of the thermosetting resin layer with the reinforcing fiber group, and further impregnating the precursor of the thermoplastic resin layer.
(v) A step of applying the precursor of the island phase to the intermediate obtained by impregnating the precursor of the thermoplastic resin layer with the reinforcing fiber group.
(vi) A step of applying the precursor of the island phase to one surface of the precursor of the thermoplastic resin layer and impregnating the precursor of the thermoplastic resin layer.
(vii) A step of vibrating, by a vibration bar or the like, the intermediate obtained by impregnating the precursor of the thermoplastic resin with the reinforcing fiber group to disperse the precursor of the thermoplastic resin in the reinforcing fiber group.

[Precursor of Thermosetting Resin Layer]

The precursor of the thermosetting resin layer is a composition that is to be impregnated with the reinforcing fiber group to form the thermosetting resin layer. A method for impregnating the precursor of the thermosetting resin layer with the reinforcing fiber group is not particularly limited, and examples thereof include a method of applying heat and pressure with a heat roller to soften or melt and impregnate.

A form of the precursor of the thermosetting resin layer is not limited as long as it becomes a thermosetting resin layer by being impregnated with the reinforcing fiber group, and examples of the form thereof include a liquid form, a sheet form, a non-woven fabric form, and a particulate form. However, the precursor of the thermosetting resin layer is preferably in the form of a sheet from the viewpoint of being capable of being uniformly impregnated with the reinforcing fiber group.

[Precursor of Thermoplastic Resin Layer]

The precursor of the thermoplastic resin layer is a composition that is to be impregnated with the reinforcing fiber group to form the thermoplastic resin layer. A method for impregnating the precursor of the thermoplastic resin layer with the reinforcing fiber group is not particularly limited, and examples thereof include a method of applying heat and pressure with a heat roller to melt and impregnate.

A form of the precursor of the thermoplastic resin layer is not limited as long as it becomes a thermoplastic resin layer by being impregnated with the reinforcing fiber group, and examples of the form thereof include a liquid form, a sheet form, a non-woven fabric form, and a particulate form. However, the precursor of the thermoplastic resin layer is preferably in the form of a sheet from the viewpoint of being capable of being uniformly impregnated with the reinforcing fiber group.

In order to simultaneously form the thermoplastic resin layer and the island phase from the same precursor, the precursor of the island phase and/or the precursor of the thermoplastic resin layer is preferably in a form of powder. By making the precursor powdery, a part of the precursor can be impregnated into the thermosetting resin layer, and the remaining part can be melted on the surface of the fiber-reinforced plastic to form the thermoplastic resin layer.

As a temperature for melting the precursor of the thermoplastic resin layer, in the case where the first thermoplastic resin, which is the main component of the precursor of the thermoplastic resin layer, is crystalline, heating and pressure molding are preferably performed at a temperature of + 30°C above a melting point thereof. In the case of amorphous, heating and pressure molding are preferably performed at a temperature of + 30°C above a glass transition temperature thereof.

The thermoplastic resin layer may be disposed at least on a part that will become a joining surface with another member. However, in order to ensure stable heat-welding properties, a certain margin of the joining surface may be expected in some cases, and from that point of view, it is preferable that the thermoplastic resin layer is present in 50% or more, and more preferably 80% or more of an area of the surface layer of the fiber-reinforced plastic.

[Precursor of Island Phase]

The precursor of the island phase is not particularly limited as long as it becomes the island phase present in the thermosetting resin layer in the fiber-reinforced plastic. Examples of a form of the precursor of the island phase include a liquid form, a sheet form, a non-woven fabric form, and a particulate form. However, from the viewpoint of being able to present uniformly on the interface between the thermosetting resin layer and the thermoplastic resin layer, the precursor of the island phase is preferably in the form of particles, and more preferably in the form of powder.

When the precursor of the island phase is contained in advance in the precursor of the thermosetting resin layer, the precursor of the island phase is preferably in a range of 10 parts by mass to 40 parts by mass, more preferably in a range of 15 parts by mass to 40 parts by mass, and still more preferably in a range of 25 parts by mass to 40 parts by mass with respect to 100 parts by mass of the precursor of the thermosetting resin layer. By setting the amount of the island phase to be within these ranges, it is possible to balance adhesiveness between intermediates of the fiber-reinforced plastic and the joining strength of the fiber-reinforced plastic.

Similarly, when the precursor of the island phase is contained in advance in the precursor of the thermoplastic resin layer, the precursor of the island phase is preferably in a range of 10 parts by mass to 40 parts by mass, more preferably in a range of 15 parts by mass to 40 parts by mass, and still more preferably in a range of 25 parts by mass to 40 parts by mass with respect to 100 parts by mass of the precursor of the thermoplastic resin layer. By setting the amount of the island phase to be within these ranges, it is possible to balance adhesiveness between intermediates of the fiber-reinforced plastic and the joining strength of the fiber-reinforced plastic.

Examples of a preferred mode of manufacturing the fiber-reinforced plastic according to the embodiment of the present invention include a method of molding by using an intermediate such as a prepreg with a high impregnation rate, based on the above definition, and a semi-preg with a low impregnation rate. In this molding step, the fiber-reinforced plastic is shaped into a desired structure, and a curing reaction of the thermosetting resin is accelerated.

Here, a glass transition temperature of the thermosetting resin is preferably 120°C or more, more preferably 150°C or more, and still more preferably 180°C or more from the viewpoint of being used as a structure. Through this molding step, the glass transition temperature of the thermosetting resin can be controlled to be higher than the glass transition temperature of the thermoplastic resin or the rubbery polymer in the island phase.

The fiber-reinforced plastic according to the embodiment of the present invention may be obtained by molding the intermediate alone, by laminating a plurality of the intermediates, and by laminating the intermediate with another material. The structure of the laminating is not particularly limited except that the intermediate is placed on one of the outermost laminate units corresponding to a surface of a molded product, and prepregs, films, sheets, non-woven fabrics, porous bodies, metals, and the like can be laminated depending on a use thereof.

The fiber-reinforced plastic according to the embodiment of the present invention is not limited to the example of molding the intermediate, and can be preferably selected as long as the embodiment of the present invention can be implemented through process of prepreg autoclave molding, press molding, pultrusion molding, resin transfer (RTM) molding, or resin infusion (RI) molding.

The structure of the fiber-reinforced plastic according to the present invention is not particularly limited, and various structures such as a flat plate, a curved plate, an uneven structure, a hollow structure, and a sandwich structure can be selected according to a use thereof.

The fiber-reinforced plastic of the present invention can be made into an integrated product obtained by welding with another member via the thermoplastic resin layer disposed on the surface layer. A method for joining in this case is not limited, and examples thereof include welding methods such as hot plate welding, vibration welding, ultrasonic welding, laser welding, resistance welding, induction welding, insert injection molding, and outsert injection welding.

The fiber-reinforced plastic according to the present invention is preferably used for aircraft structural members, windmill blades, automobile outer panels, computer applications such as IC trays and laptop computer cases, and even sports applications such as golf shafts and tennis rackets.

Examples

The present invention will be described in more detail below with reference to Examples. However, the scope of the present invention is not limited to these Examples.

<Reinforcing Fiber Bundle>

·A-1

A polymer containing polyacrylonitrile as a main component was subjected to spinning, baking treatment, and surface oxidation treatment to obtain a reinforcing fiber bundle A-1 constituted by continuous carbon fibers with a total number of 24,000 single fibers, which was used to form a reinforcing fiber group. Properties of the carbon fiber bundle A-1 were as follows.

Single fiber diameter: 7 $\mu$m
Density: 1.8 g/cm$^3$
Tensile strength: 4.2 GPa
Tensile modulus: 230 GPa
Surface free energy: 15 mJ/m$^2$

The reinforcing fiber bundle A-1 was used as a base. Various sizing agent compounds were mixed with acetone to obtain solutions in which the respective compounds were uniformly dissolved in approximately 1 mass%. After applying each compound to the carbon fiber bundle by an immersion method, heat treatment was performed under 210°C for 90 seconds, and an amount of each compound adhered was adjusted to 0.5 parts by mass with respect to 100 parts by mass of the carbon fibers to which each compound was adhered. The surface free energy after application of each sizing agent compound used for the carbon fibers and the sizing agent are as follows.

·A-2

Sorbitol polyglycidyl ether ("Denacol" (registered trademark) EX-614B, manufactured by Nagase ChemteX Corporation)
Surface free energy: 32 mJ/m$^2$

·A-3

Bisphenol A diglycidyl ether ("jER" (registered trademark) 828, manufactured by Mitsubishi Chemical Corporation)
Surface free energy: 9 mJ/m$^2$

**EP 4 163 074 A1**

·A-4

Polyethylene glycol diglycidyl ether ("Denacol" (registered trademark) EX-841, manufactured by Nagase ChemteX Corporation)
Surface free energy: 20 mJ/m$^2$

<Precursor of Island Phase>

·D-1

To a mixed solvent of 300 parts by mass of chloroform and 100 parts by mass of methanol were added 90 parts by mass of transparent polyamide (Grilamid (registered trademark) TR55, manufactured by M Chemie Japan Co., Ltd.), 7.5 parts by mass of an epoxy resin (jER (registered trademark) 828, (manufactured by Mitsubishi Chemical Corporation)), and 2.5 parts by mass of a curing agent (Tomide (registered trademark) #296, manufactured by T&K Toka Co., Ltd.) to obtain a homogeneous solution. Next, the obtained homogeneous solution was atomized, by using a spray gun for coating, toward a liquid surface of 3,000 parts by mass of n-hexane being stirred, to precipitate the solute. The precipitated solid was separated by filtration, washed well with n-hexane, and vacuum-dried for 24 hours under a temperature of 100°C, to thereby obtain epoxy-modified polyamide particles having a spherical semi-IPN structure, as a precursor D-1 of the island phase containing the second thermoplastic resin as a main component. The obtained precursor D-1 of the island phase containing the second thermoplastic resin as a main component had an average particle diameter of 13 μm and a melting point of 250°C.

·D-2

Polyurethane fine particles (Dymic Beads (registered trademark) UCN-5150D, manufactured by Dainichiseika Color & Chemicals Mfg. Co., Ltd.) were used as a precursor D-2 of the island phase containing a rubbery polymer as a main component. The precursor D-2 of the island phase containing a rubbery polymer as a main component had an average particle diameter of 15 μm and a glass transition temperature of - 27°C.

·D-3

Low melting point polyamide (Amilan (registered trademark) CM4000 (manufactured by Toray Industries, Inc.), terpolymerized polyamide resin, melting point 155°C) was powdered to obtain a precursor D-3 of the island phase containing a thermoplastic resin as a main component. The obtained precursor D-3 of the island phase containing a thermoplastic resin as a main component had an average particle diameter of 25 μm.

·D-4

Polyamide 12 fine particles (SP-500 (manufactured by Toray Industries, Inc.), average particle diameter 5 μm, spherical shape) were used as a precursor D-4.

<Precursor of Thermosetting Resin Layer>

·B-1

Into a kneading device were put 30 parts by mass, 40 parts by mass, and 30 parts by mass of epoxy resin main agents (jER (registered trademark) 828 (manufactured by Mitsubishi Chemical Corporation)), (jER (registered trademark) 1001 (manufactured by Mitsubishi Chemical Corporation)), and (jER (registered trademark) 154 (manufactured by Mitsubishi Chemical Corporation)), respectively, followed by kneading under heating at 150°C until the components were mutually dissolved. Next, while continuing kneading, the temperature was lowered to 80°C, and 26 parts by mass of a curing agent (3,3'DAS (3,3'-diaminodiphenylsulfone, manufactured by Mitsubishi Fine Chemicals, Inc.)) was added, followed by kneading at 80°C for 30 minutes, to obtain a precursor B-1 of the thermosetting resin layer.

·B-2

Into a kneading device were put 30 parts by mass, 40 parts by mass, and 30 parts by mass of epoxy resin main agents (jER (registered trademark) 828 (manufactured by Mitsubishi Chemical Corporation)), (jER (registered trademark) 1001 (manufactured by Mitsubishi Chemical Corporation)), and (jER (registered trademark) 154 (manufactured by Mitsubishi Chemical Corporation)), respectively, followed by kneading under heating at 150°C until the components were mutually dissolved. Then, 30 parts by mass of the precursor D-1 of the island phase containing a thermoplastic resin as a main component was added and kneaded until D-1 was dispersed. Next, while continuing kneading, the temperature was lowered to 80°C, and 26 parts by mass of a curing agent (3,3'DAS (3,3'-diaminodiphenylsulfone, manufactured by Mitsubishi Fine Chemicals, Inc.)) was added, followed by kneading at 80°C for 30 minutes, to obtain a precursor B-2 of the thermosetting resin layer containing D-1.

·B-3

Into a kneading device were put 30 parts by mass, 40 parts by mass, and 30 parts by mass of epoxy resin main agents (jER (registered trademark) 828 (manufactured by Mitsubishi Chemical Corporation)), (jER (registered trademark) 1001 (manufactured by Mitsubishi Chemical Corporation)), and (jER (registered trademark) 154 (manufactured by Mitsubishi Chemical Corporation)), respectively, followed by kneading under heating at 150°C until the components were mutually dissolved. Then, the temperature was lowered to 80°C, 30 parts by mass of the precursor D-2 of the island phase containing a thermoplastic resin as a main component was added and kneaded until D-2 was dispersed. Next, while continuing kneading, 26 parts by mass of a curing agent (3,3'DAS (3,3'-diaminodiphenylsulfone, manufactured by Mitsubishi Fine Chemicals, Inc.)) was added, followed by kneading at 80°C for 30 minutes, to obtain a precursor B-3 of the thermosetting resin layer containing D-2.

·B-4

Into a kneading device were put 50 parts by mass, 50 parts by mass, and 7 parts by mass of epoxy resin main agents (araldite (registered trademark) MY721 (manufactured by Huntsman Advanced Materials)), (jER (registered trademark) 825 (manufactured by Mitsubishi Chemical Corporation)), and (Sumika Excel (registered trademark) PES5003P (manufactured by Sumitomo Chemical Co., Ltd.)), respectively, followed by kneading under heating at 150°C until the components were mutually dissolved. Next, while continuing kneading, the temperature was lowered to 80°C, and 45.1 parts by mass of a curing agent (Seikacure S, (manufactured by Wakayama Seika Kogyo Co., Ltd.)) was added, followed by kneading at 80°C for 30 minutes, to obtain a precursor B-4 of the thermosetting resin.

<Precursor of Thermoplastic Resin Layer>

·C-1

Low melting point polyamide (Amilan (registered trademark) CM4000 (manufactured by Toray Industries, Inc.), terpolymerized polyamide resin, melting point 155°C) was formed into a sheet to obtain a precursor C-1 of the thermoplastic resin layer.

·C-2

Into a twin-screw extruder were put 100 parts by mass of low melting point polyamide (Amilan (registered trademark) CM4000 (manufactured by Toray Industries, Inc.), terpolymerized polyamide resin, melting point 155°C) and 30 parts by mass of the precursor D-1 of the thermoplastic resin domain, followed by heating and kneading at 180°C. The obtained kneaded product was formed into a sheet to obtain a precursor C-2 of the thermoplastic resin layer.

·C-3

Low melting point polyamide (Amilan (registered trademark) CM4000 (manufactured by Toray Industries, Inc.), terpolymerized polyamide resin, melting point 155°C) was formed into powder to obtain a precursor C-3 of the thermoplastic resin layer. The precursor C-3 of the thermoplastic resin layer had an average particle diameter of 25 μm.

·C-4

Polyamide 12 (Rilsamide (registered trademark) AMN O TLD (manufactured by Arkema Co., Ltd.), melting point 175°C) was formed into a sheet to obtain a precursor C-4 of the thermoplastic resin layer.

·C-5

Polyphenylene sulfide (Torelina (registered trademark) A670T05 (manufactured by Toray Industries, Inc.), melting point 278°C) was formed into a sheet to obtain a precursor C-5 of the thermoplastic resin layer.

·C-6

Polyetherketoneketone (Kepstan (registered trademark) 7002 (manufactured by Arkema Corporation), melting point 332°C) was formed into a sheet to obtain a precursor C-6 of the thermoplastic resin layer.

<Method for Producing Prepreg>

·P-1

A reinforcing fiber bundle was aligned in one direction and opened to form a reinforcing fiber sheet forming a continuous reinforcing fiber group. A basis weight of the reinforcing fiber sheet was set to 200 g/m$^2$. The precursor of the thermosetting resin layer was coated on release paper by using a knife coater to prepare a precursor film of the thermosetting resin layer, and the precursor film was superimposed on both sides of the reinforcing fiber sheet. The resultant was heated and pressed at 80°C and 0.5 MPa by using a heat roll, to thereby obtain an intermediate of a prepreg in which the precursor of the thermosetting resin layer was impregnated with the reinforcing fiber sheet. A basis weight of the prepared precursor film of the thermosetting resin layer was set to 50 g/m$^2$.

Next, the precursor of the thermoplastic resin layer was placed on one surface of the intermediate of the prepreg, and the resultant was pressed at 0.5 MPa by using a heat roll whose temperature was kept at 30°C or more higher than a melting point of the precursor of the thermoplastic resin layer, to thereby obtain a prepreg in which the interface between the thermosetting resin layer and the thermoplastic resin layer was positioned inside the reinforcing fiber group. The precursor of the thermoplastic resin layer was placed on one surface of the intermediate of the prepreg so as to have a basis weight of 50 g/m$^2$.

·P-2

A reinforcing fiber bundle was aligned in one direction and opened to form a reinforcing fiber sheet forming a continuous reinforcing fiber group. A basis weight of the reinforcing fiber sheet was set to 200 g/m$^2$. The precursor of the thermosetting resin layer was coated on release paper by using a knife coater to prepare a precursor film of the thermosetting resin layer, and the precursor film was superimposed on both sides of the reinforcing fiber sheet. The resultant was heated and pressed at 80°C and 0.5 MPa by using a heat roll, to thereby obtain an intermediate of a prepreg in which the precursor of the thermosetting resin layer was impregnated with the reinforcing fiber sheet. A basis weight of the prepared precursor film of the thermosetting resin layer was set to 50 g/m$^2$.

Next, a precursor of the island phase containing the second thermoplastic resin as a main component was spread on one surface of the intermediate of the prepreg by a feeder. The precursor was spread in a spray amount of 11.5g/m$^2$.

Then, the precursor of the thermoplastic resin layer was placed on the surface of the intermediate of the prepreg on which the precursor of the island phase containing the second thermoplastic resin as a main component was spread. The precursor of the thermoplastic resin layer was placed on one surface of the intermediate of the prepreg so as to have a basis weight of 38.5 g/m$^2$, and the resultant was pressed at 0.5 MPa by using a heat roll whose temperature was kept at 30°C or more higher than a melting point of the precursor of the thermoplastic resin layer, to thereby obtain a prepreg in which the interface between the thermosetting resin layer and the thermoplastic resin layer was positioned inside the reinforcing fiber group, and the island phase containing the second thermoplastic resin as a main component was dispersed in the sea phase containing the thermosetting resin as a main component, and was present in the vicinity of the interface.

·P-3

A reinforcing fiber bundle was aligned in one direction and opened to form a reinforcing fiber sheet forming a continuous reinforcing fiber group. A basis weight of the reinforcing fiber sheet was set to 200 g/m$^2$. The precursor of the thermosetting resin layer was coated on release paper by using a knife coater to prepare a precursor film of the thermosetting resin layer, and the precursor film was superimposed on both sides of the reinforcing fiber sheet. The resultant was heated and pressed at 80°C and 0.5 MPa by using a heat roll, to thereby obtain a prepreg in which only the precursor of the thermosetting resin layer was impregnated with the reinforcing fiber sheet. B-1 was used as the precursor of the thermosetting resin layer.

·P-4

A prepreg in which only the precursor of the thermosetting resin layer was impregnated with the reinforcing fiber sheet was obtained in the same manner as P-3, except that B-3 was used as the precursor of the thermosetting resin layer.

·P-5

A reinforcing fiber bundle was aligned in one direction and opened to form a reinforcing fiber sheet forming a continuous reinforcing fiber group. A basis weight of the reinforcing fiber sheet was set to 200 g/m². The precursor of the thermoplastic resin layer was placed on one surface of the fiber-reinforced sheet, and the resultant was pressed at 0.5 MPa by using a heat roll whose temperature was kept at 30°C or more higher than a melting point of the precursor of the thermoplastic resin layer, to thereby obtain an intermediate of the prepreg in which the precursor of the thermoplastic resin layer was impregnated with the reinforcing fiber sheet. The precursor of the thermoplastic resin layer was placed on one surface of the intermediate of the prepreg so as to have a basis weight of 50 g/m².

Immediately after being heated and pressed by the heat roll, the resultant was allowed to pass through an ultrasonic wave generator that periodically vibrates to apply vibration, whereby the precursor of the thermoplastic resin phase was dispersed in the reinforcing fiber sheet. In this case, the ultrasonic wave generator had a frequency of 20 kHz, an amplitude of 100%, and a pressure of 1.0 MPa. A contact distance between a horn of the ultrasonic wave generator and the prepreg intermediate was approximately 25 mm, and a time during which ultrasonic vibration was applied was approximately 1.0 second.

Next, the precursor of the thermosetting resin layer was coated on release paper by using a knife coater to prepare a precursor film of the thermosetting resin layer, and the precursor film was superimposed on a side of the reinforcing fiber sheet opposing to a side on which the precursor of the thermoplastic resin layer was placed. The resultant was heated and pressed at 80°C and 0.5 MPa by using a heat roll, to thereby obtain an intermediate of a prepreg in which the precursor of the thermosetting resin layer was impregnated with the reinforcing fiber sheet. A basis weight of the prepared precursor film of the thermosetting resin layer was set to 50 g/m².

<Evaluation Method>

(1) Measurement of Volume Ratio of Island Phase in Fiber-reinforced plastic

In a cross section perpendicular to the fiber direction of an outermost layer of the fiber-reinforced plastic, a fiber closest to the surface of the fiber-reinforced plastic was taken as an outermost fiber. In a measurement range of 100 $\mu$m in the thickness direction from a reference line that passes through a center of the outermost fiber and was horizontal to the surface of the fiber-reinforced plastic toward the thermosetting resin layer side, a volume ratio (volume%) of the island phase was calculated.

(2) Method for Measuring Joining Strength of Fiber-reinforced Plastic

The prepared prepregs were cut into a predetermined size, and two sheets of any one of the prepregs produced by the methods of P-1, P-2, and P-5, and six sheets of the prepregs produced by the method of P-3 or P-4 were prepared.

The fiber direction of the reinforcing fibers was defined as 0° and a direction perpendicular to the fiber direction was defined as 90°, and the prepregs were laminated at $[0°/90°]_{2S}$ (the symbol s indicates mirror symmetry) to produce a prepreg laminate. In this case, the prepregs were laminated such that the two outermost layers on each side of the laminate were the prepregs produced by the method in P-1, P-2, or P-5, and the surface layer of the laminate was the thermoplastic resin layer. This laminate was set in a press molding die, and while maintaining the shape by using a jig or spacer if necessary, the die was applied with a pressure of 0.6 MPa by a press, heated at 180°C for 2 hours, to thereby obtain a fiber-reinforced plastic.

The obtained fiber-reinforced plastic was cut into two pieces each having a width of 250 mm and a length of 100 mm to form two panels, with a direction of an angle of 0° with respect to the fiber direction of the contained reinforcing fibers as a length direction of the test piece. The panels were dried in a vacuum oven for 24 hours, overlapped such that an overlap length was 12.5 mm, and applied with a pressure of 3 MPa under a temperature 20°C higher than the melting point of the thermoplastic resin layer and held for 1 minute to weld the overlapping surface to obtain a joined body. A tab was adhered to the obtained joined body conforming to ISO 4587:1995 (JIS K6850 (1994)) and then the resultant was cut to have a width of 25 mm to obtain a test piece.

The obtained test piece was dried in a vacuum oven for 24 hours, and the joining strength (MPa) thereof was evaluated under an environmental temperature of 23°C based on ISO 4587:1995 (JIS K6850 (1994)).

(Example 1)

A prepreg was produced by the method in P-2, by using A-1 as the reinforcing fiber bundle, B-2 as the precursor of the thermosetting resin layer, C-1 as the precursor of the thermoplastic resin layer, and D-1 as the precursor of the island phase. Test pieces were produced in accordance with the respective evaluations by using the produced prepreg and evaluated.

The interface between the thermosetting resin layer and the thermoplastic resin layer of the obtained prepreg was positioned inside the reinforcing fiber group formed by the carbon fiber bundle A-1, and the thermosetting resin layer had a sea-island structure in which an island phase containing the second thermoplastic resin as a main component was dispersed in a sea phase containing a thermosetting resin as a main component. The island phase containing a thermoplastic resin as a main component was contained in the vicinity of the interface between the thermoplastic resin layer and the thermosetting resin layer.

When impregnating the precursor of the thermosetting resin layer with the reinforcing fiber sheet, the island phase containing, as a main component, a thermoplastic resin that was contained in the precursor B-2 of the thermosetting resin layer was unevenly distributed on the surface of the reinforcing fiber sheet, so that the joining strength was excellent.

(Example 2)

A prepreg was produced by the method in P-2, by using A-1 as the reinforcing fiber bundle, B-2 as the precursor of the thermosetting resin layer, C-2 as the precursor of the thermoplastic resin layer, and D-1 as the precursor of the island phase. Test pieces were produced in accordance with the respective evaluations by using the produced prepreg and evaluated.

The interface between the thermosetting resin layer and the thermoplastic resin layer of the obtained prepreg was positioned inside the reinforcing fiber group formed by the carbon fiber bundle A-1, and the thermosetting resin layer had a sea-island structure in which an island phase containing the second thermoplastic resin as a main component was dispersed in a sea phase containing a thermosetting resin as a main component. The island phase containing a thermoplastic resin as a main component was contained in the vicinity of the interface between the thermosetting resin layer and the thermoplastic resin layer.

When impregnating the precursor of the thermosetting resin layer with the reinforcing fiber sheet, the island phase containing, as a main component, the second thermoplastic resin that was contained in the precursor of the thermosetting resin layer was unevenly distributed on the surface of the reinforcing fiber sheet, and the island phase containing the second thermoplastic resin as a main component also existed in the thermoplastic resin layer, so that the joining strength was excellent.

(Example 3)

A prepreg was produced by the method in P-2, by using A-1 as the reinforcing fiber bundle, B-3 as the precursor of the thermosetting resin layer, C-1 as the precursor of the thermoplastic resin layer, and D-2 as the precursor of the island phase. Test pieces were produced in accordance with the respective evaluations by using the produced prepreg and evaluated.

The interface between the thermosetting resin layer and the thermoplastic resin layer of the obtained prepreg was positioned inside the reinforcing fiber group formed by the carbon fiber bundle A-1, and the thermosetting resin layer had a sea-island structure in which an island phase containing a rubbery polymer as a main component was dispersed in a sea phase containing a thermosetting resin as a main component. The island phase containing a rubbery polymer as a main component was contained in the vicinity of the interface between the thermoplastic resin layer and the thermoplastic resin layer.

When impregnating the precursor of the thermosetting resin layer with the reinforcing fiber sheet, the island phase containing, as a main component, a rubbery polymer that was contained in the precursor B-3 of the thermosetting resin layer was unevenly distributed on the surface of the reinforcing fiber sheet, so that the joining strength was excellent.

(Example 4)

A prepreg was produced by the method in P-2, by using A-1 as the reinforcing fiber bundle, B-1 as the precursor of the thermosetting resin layer, C-3 as the precursor of the thermoplastic resin layer, and D-3 as the precursor of the island phase containing a thermoplastic resin as a main component. Test pieces were produced in accordance with the respective evaluations by using the produced prepreg and evaluated.

The interface between the thermosetting resin layer and the thermoplastic resin layer of the obtained prepreg was positioned inside the reinforcing fiber group formed by the carbon fiber bundle A-1, and the thermosetting resin layer had a sea-island structure in which an island phase containing the second thermoplastic resin as a main component was dispersed in a sea phase containing a thermosetting resin as a main component. The island phase containing a thermoplastic resin as a main component was contained in the vicinity of the interface between the thermosetting resin layer and the thermoplastic resin layer.

When impregnating the precursor of the thermoplastic resin layer with the reinforcing fiber sheet, since the precursor of the thermoplastic resin layer was in the form of powder, a part thereof penetrated into the thermosetting resin layer and became the island phase containing a thermoplastic resin as a main component, which was unevenly distributed in the vicinity of the interface between the thermosetting resin layer and the thermoplastic resin layer, the joining strength was excellent.

(Example 5)

A prepreg was produced by the method in P-2, by using A-1 as the reinforcing fiber bundle, B-1 as the precursor of the thermosetting resin layer, C-1 as the precursor of the thermoplastic resin layer, and D-1 as the precursor of the island phase containing a thermoplastic resin as a main component. Test pieces were produced in accordance with the respective evaluations by using the produced prepreg and evaluated.

The interface between the thermosetting resin layer and the thermoplastic resin layer of the obtained prepreg was positioned inside the reinforcing fiber group formed by the carbon fiber bundle A-1, and the thermosetting resin layer had a sea-island structure in which an island phase containing the second thermoplastic resin as a main component was dispersed in a sea phase containing a thermosetting resin as a main component. The island phase containing a thermoplastic resin as a main component was contained in the vicinity of the interface between the thermosetting resin layer and the thermoplastic resin layer.

When impregnating the precursor of the thermosetting resin layer with the reinforcing fiber sheet, the island phase containing, as a main component, the second thermoplastic resin that was contained in the precursor of the thermosetting resin layer was unevenly distributed on the surface of the reinforcing fiber sheet, and the island phase containing the second thermoplastic resin as a main component also existed in the thermoplastic resin layer, so that the joining strength was excellent.

(Example 6)

A prepreg was produced by the method in P-2, by using A-1 as the reinforcing fiber bundle, B-1 as the precursor of the thermosetting resin layer, C-1 as the precursor of the thermoplastic resin layer, and D-2 as the precursor of the island phase containing a rubbery polymer as a main component. Test pieces were produced in accordance with the respective evaluations by using the produced prepreg and evaluated.

The interface between the thermosetting resin layer and the thermoplastic resin layer of the obtained prepreg was positioned inside the reinforcing fiber group formed by the carbon fiber bundle A-1, and the thermosetting resin layer had a sea-island structure in which an island phase containing a rubbery polymer as a main component was dispersed in a sea phase containing a thermosetting resin as a main component. The island phase containing a rubbery polymer as a main component was contained in both layers of and in the vicinity of the interface between the thermosetting resin layer and the thermoplastic resin layer. Since the island phase containing a rubbery polymer as a main component was unevenly distributed in the vicinity of the interface between the thermosetting resin layer and the thermoplastic resin layer and the island phase existed in both layers of the thermosetting resin layer and the thermoplastic resin layer, the joining strength was excellent.

(Example 7)

A prepreg was prepared for various evaluations in the same manner as in Example 4 except that A-3 was used as the reinforcing fibers, C-1 was used as the precursor of the thermoplastic resin layer, and D-1 was used as the precursor of the island phase.

The interface between the thermosetting resin layer and the thermoplastic resin layer of the obtained prepreg was positioned inside the reinforcing fiber group formed by the carbon fiber bundle A-3, and a sea-island structure was formed, in which an island phase was dispersed in a sea phase containing a thermosetting resin as a main component. The island phase containing a thermoplastic resin as a main component was contained in the vicinity of the interface between the thermosetting resin layer and the thermoplastic resin layer.

When impregnating the precursor of the thermoplastic resin layer with the reinforcing fiber sheet, since the precursor of the thermoplastic resin layer was in the form of powder, a part thereof penetrated into the thermosetting resin layer and became the island phase containing a thermoplastic resin as a main component, which was unevenly distributed in the vicinity of the interface between the thermosetting resin layer and the thermoplastic resin layer, the joining strength was excellent.

(Example 8)

A prepreg was prepared for various evaluations in the same manner as in Example 4 except that A-2 was used as the reinforcing fibers, C-4 was used as the precursor of the thermoplastic resin phase, and D-4 was used as the precursor of the island phase.

The interface between the thermosetting resin layer and the thermoplastic resin layer of the obtained prepreg was positioned inside the reinforcing fiber group formed by the carbon fiber bundle A-2, and a sea-island structure was formed, in which an island phase was dispersed in a sea phase containing a thermosetting resin as a main component. The island phase containing a thermoplastic resin as a main component was contained in the vicinity of the interface between the thermosetting resin layer and the thermoplastic resin layer. It is considered that the use of the carbon fibers A-2, which had a high affinity with the thermosetting resin and the thermoplastic resin, ensured the dispersibility of the carbon fibers, improved the fluidity of the resin, and promoted the formation of the island phase.

When impregnating the precursor of the thermoplastic resin layer with the reinforcing fiber sheet, since the precursor of the thermoplastic resin layer was in the form of powder, a part thereof penetrated into the thermosetting resin layer and became the island phase containing a thermoplastic resin as a main component, which was unevenly distributed in the vicinity of the interface between the thermosetting resin layer and the thermoplastic resin layer, the joining strength was excellent.

(Example 9)

A prepreg was produced by the method in P-5, by using A-4 as the reinforcing fiber bundle, B-3 as the precursor of the thermosetting resin layer, and C-5 as the precursor of the thermoplastic resin layer. Test pieces were produced in accordance with the respective evaluations by using the produced prepreg and evaluated.

The interface between the thermosetting resin layer and the thermoplastic resin layer of the obtained prepreg was positioned inside the reinforcing fiber group formed by the carbon fiber bundle A-3, and a sea-island structure was formed, in which an island phase was dispersed in a sea phase containing a thermosetting resin as a main component. The island phase containing a thermoplastic resin as a main component was contained in the vicinity of the interface between the thermosetting resin layer and the thermoplastic resin layer.

When impregnating the precursor of the thermoplastic resin layer with the reinforcing fiber sheet, since a part of the precursor was dispersed in the reinforcing fiber sheet by vibration, and became the island phase containing a thermoplastic resin as a main component, which was unevenly distributed in the vicinity of the interface between the thermosetting resin layer and the thermoplastic resin layer, the joining strength was excellent.

(Example 10)

A prepreg was prepared for various evaluations in the same manner as in Example 9 except that C-6 was used as the precursor of the thermoplastic resin phase.

The interface between the thermosetting resin layer and the thermoplastic resin layer of the obtained prepreg was positioned inside the reinforcing fiber group formed by the carbon fiber bundle A-4, and a sea-island structure was formed, in which an island phase was dispersed in a sea phase containing a thermosetting resin as a main component. The island phase containing a thermoplastic resin as a main component was contained in the vicinity of the interface between the thermosetting resin layer and the thermoplastic resin layer.

When impregnating the precursor of the thermoplastic resin layer with the reinforcing fiber sheet, since a part of the precursor was dispersed in the reinforcing fiber sheet by vibration, and became the island phase containing a thermoplastic resin as a main component, which was unevenly distributed in the vicinity of the interface between the thermosetting resin layer and the thermoplastic resin layer, the joining strength was excellent.

(Comparative Example 1)

A prepreg was produced by the method in P-1, by using A-1 as the reinforcing fiber bundle, B-1 as the precursor of the thermosetting resin layer, and C-1 as the precursor of the thermoplastic resin layer. Test pieces were produced in accordance with the respective evaluations by using the produced prepreg and evaluated.

The obtained prepreg and test pieces did not contain an island phase, and therefore had low joining strength.

(Comparative Examples 2 to 4)

Prepregs were prepared as shown in Table 1, and various evaluations were performed by using these prepregs. The interfaces between the thermosetting resin layer and the thermoplastic resin layer of the obtained prepregs were positioned inside the reinforcing fiber group formed by carbon fiber bundles, and no island phase was contained other than the thermoplastic resin layer and the thermosetting resin layer.

[Table 1]

| | Ex. 1 | Ex. 2 | Ex. 3 | Ex. 4 | Ex. 5 | Ex. 6 | Ex. 7 | Ex. 8 | Ex. 9 | Ex. 10 | Comp. Ex. 1 | Comp. Ex. 2 | Comp. Ex. 3 | Comp. Ex. 4 |
|---|---|---|---|---|---|---|---|---|---|---|---|---|---|---|
| Reinforcing fiber bundle | A-1 | A-1 | A-1 | A-1 | A-1 | A-1 | A-3 | A-2 | A-4 | A-4 | A-1 | A-3 | A-4 | A-4 |
| Surface free energy (mJ/m$^2$) of reinforcing fiber bundle | 15 | 15 | 15 | 15 | 15 | 15 | 9 | 32 | 20 | 20 | 15 | 32 | 20 | 20 |
| Precursor of thermosetting resin layer | B-2 | B-2 | B-3 | B-1 | B-1 | B-1 | B-1 | B-1 | B-3 | B-3 | B-1 | B-1 | B-3 | B-3 |
| Precursor of thermoplastic resin layer | C-1 | C-2 | C-1 | C-3 | C-1 | C-1 | C-1 | C-4 | C-5 | C-6 | C-1 | C-4 | C-5 | C-6 |
| Precursor of island phase | D-1 | D-1 | D-2 | D-3 | D-1 | D-2 | D-1 | D-4 | - | - | - | - | - | - |
| Method for manufacturing prepreg of adhesive layer | P-2 | P-2 | P-2 | P-2 | P-2 | P-2 | P-2 | P-2 | P-5 | P-5 | P-1 | P-1 | P-1 | P-1 |
| Volume ratio [volume%] of island phase in fiber-reinforced plastic | 24 | 42 | 28 | 18 | 33 | 36 | 5 | 30 | 4 | 2 | 0 | 0 | 0 | 0 |
| Joining strength [MPa] of fiber-reinforced resin | 45.0 | 48.0 | 42.5 | 42.0 | 46.5 | 44.0 | 40.5 | 42.5 | 44.5 | 49.5 | 39.0 | 36.5 | 35.0 | 43.0 |

Although the present invention has been described in detail with reference to specific embodiments, it will be apparent to those skilled in the art that various changes and modifications can be made without departing from the spirit and scope of the present invention. The present application is based on a Japanese Patent Application (Japanese Patent Application No. 2020-096946) filed on June 3, 2020, the content of which is incorporated herein by reference.

REFERENCE SIGNS LIST

1: reinforcing fiber
3: thermosetting resin layer
4: thermoplastic resin layer
5: fiber-reinforced plastic
6: interface
7: island phase
8: sea phase containing thermosetting resin as main component
9: surface of fiber-reinforced plastic
10: outermost fiber
11: reference line
12: measurement range

**Claims**

1.  A fiber-reinforced plastic, comprising: a reinforcing fiber group; a thermosetting resin layer; and a thermoplastic resin layer comprising a first thermoplastic resin, wherein

    the thermoplastic resin layer is provided as a surface layer of the fiber-reinforced plastic,
    an interface between the thermoplastic resin layer and the thermosetting resin layer is positioned inside the reinforcing fiber group, and
    the thermosetting resin layer has a sea-island structure in which an island phase, which contains a second thermoplastic resin or a rubbery polymer as a main component, is dispersed in a sea phase, which contains a thermosetting resin as a main component.

2.  The fiber-reinforced plastic according to Claim 1, wherein the second thermoplastic resin is the same type of resin as the first thermoplastic resin.

3.  The fiber-reinforced plastic according to Claim 2, wherein the second thermoplastic resin is the same resin as the first thermoplastic resin.

4.  The fiber-reinforced plastic according to Claim 1 or 2, wherein the second thermoplastic resin or the rubbery polymer has a melting point higher than a melting point of the first thermoplastic resin.

5.  The fiber-reinforced plastic according to any one of Claims 1 to 4, wherein the island phase contains a component of the thermosetting resin of the sea phase.

6.  The fiber-reinforced plastic according to any one of Claims 1 to 5, wherein the island phase is unevenly distributed near the interface between the thermosetting resin layer and the thermoplastic resin layer.

7.  The fiber-reinforced plastic according to any one of Claims 1 to 6, wherein in a range of 100 $\mu$m in a thickness direction from an outermost fiber toward the thermosetting resin layer side in a thickness direction cross section, a volume ratio of the island phase is 1 volume% or more with respect to 100 volume% of the range.

8.  The fiber-reinforced plastic according to any one of Claims 1 to 7, wherein the island phase in a thickness direction cross section has an average particle diameter of 0.1 $\mu$m or more and 10 $\mu$m or less.

9.  The fiber-reinforced plastic according to any one of Claims 1 to 8, wherein the island phase has a major axis length of 3 $\mu$m or more and 30 $\mu$m or less.

10. The fiber-reinforced plastic according to any one of Claims 1 to 9, wherein the island phase has an elastic modulus lower than an elastic modulus of the sea phase.

11. The fiber-reinforced plastic according to any one of Claims 1 to 10, wherein the island phase has a glass transition temperature lower than a glass transition temperature of the sea phase.

12. The fiber-reinforced plastic according to any one of Claims 1 to 11, wherein a reinforcing fiber having a surface free energy of 10 $mJ/m^2$ to 50 $mJ/m^2$ as measured by the Wilhelmy method is used as the reinforcing fibers.

13. A method for manufacturing the fiber-reinforced plastic described in any one of Claims 1 to 12, comprising:

   a step of impregnating a precursor of the island phase and a precursor of the thermosetting resin layer with both surfaces of a reinforcing fiber sheet constituting the reinforcing fiber group, to form the island phase and the thermosetting resin layer;
   a step of softening or melting the precursor of the island phase and a precursor of the thermoplastic resin layer, and providing them on at least one surface of the reinforcing fiber sheet on which the island phase and the thermosetting resin layer are formed, to form the island phase and the thermoplastic resin layer to form an intermediate; and
   a step of molding the obtained intermediate.

14. A method for manufacturing the fiber-reinforced plastic described in any one of Claims 1 to 12, comprising:

   a step of impregnating a precursor of the island phase and a precursor of the thermosetting resin layer with both surfaces of a reinforcing fiber sheet constituting the reinforcing fiber group, to form the island phase and the thermosetting resin layer;
   a step of softening or melting a precursor of the thermoplastic resin layer, and providing it on at least one surface of the reinforcing fiber sheet on which the island phase and the thermosetting resin layer are formed, to form the thermoplastic resin layer to form an intermediate; and
   a step of molding the obtained intermediate.

15. A method for manufacturing the fiber-reinforced plastic described in any one of Claims 1 to 12, comprising:

   a step of impregnating a precursor of the thermosetting resin layer with both surfaces of a reinforcing fiber sheet constituting the reinforcing fiber group to form the thermosetting resin layer;
   a step of softening or melting a precursor of the island phase and a precursor of the thermoplastic resin layer, and providing them on at least one surface of the reinforcing fiber sheet on which the thermosetting resin layer is formed, to form the island phase and the thermoplastic resin layer to form an intermediate; and
   a step of molding the obtained intermediate.

16. A method for manufacturing the fiber-reinforced plastic described in any one of Claims 1 to 12, comprising:

   a step of impregnating a precursor of the thermoplastic resin layer with one surface of a reinforcing fiber sheet constituting the reinforcing fiber group, to form the thermoplastic resin layer, and applying vibration to disperse the precursor of the thermoplastic resin layer in the reinforcing fiber sheet;
   a step of impregnating a precursor of the thermosetting resin layer with the other surface of the reinforcing fiber sheet, to form an intermediate; and
   a step of molding the obtained intermediate.

FIG. 1

FIG. 2

## INTERNATIONAL SEARCH REPORT

| | International application No. |
|---|---|
| | PCT/JP2021/021103 |

A. CLASSIFICATION OF SUBJECT MATTER
B29B 11/16(2006.01)i; B32B 5/02(2006.01)i; C08J 5/04(2006.01)i; B29C 70/16(2006.01)i; B29C 70/40(2006.01)i
FI: B32B5/02 Z; B29C70/16; B29C70/ 40; B29B11/16; C08J5/04
According to International Patent Classification (IPC) or to both national classification and IPC

B. FIELDS SEARCHED

Minimum documentation searched (classification system followed by classification symbols)
B29B11/16; B32B5/02; C08J5/04; B29C70/16; B29C70/40

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2-217231 A (SEKISUI CHEMICAL CO., LTD.) 30 August 1990 (1990-08-30) claims, examples 1-3, fig. 1-4, pp. 3-4 | 1-15<br>16 |
| X<br>Y | JP 5-138785 A (THE BRITISH PETROLEUM CO PLC) 08 June 1993 (1993-06-08) claims, examples, fig. 1, 2, paragraphs [0014]-[0018], [0027] | 1-15<br>16 |
| Y | JP 2014-043536 A (ACROSS CO., LTD.) 13 March 2014 (2014-03-13) paragraph [0046] | 16 |
| A | JP 2006-198784 A (TORAY INDUSTRIES, INC.) 03 August 2006 (2006-08-03) abstract | 1-16 |
| A | JP 2008-050598 A (TORAY INDUSTRIES, INC.) 06 March 2008 (2008-03-06) abstract | 1-16 |

☒ Further documents are listed in the continuation of Box C.    ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 13 August 2021 (13.08.2021) | 24 August 2021 (24.08.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

28

**INTERNATIONAL SEARCH REPORT**

| International application No. |
| --- |
| PCT/JP2021/021103 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2-305860 A (TORAY INDUSTRIES, INC.) 19 December 1990 (1990-12-19) claims | 1-16 |
| A | JP 2002-088259 A (TORAY INDUSTRIES, INC.) 27 March 2002 (2002-03-27) abstract | 1-16 |

Form PCT/ISA/210 (continuation of second sheet) (January 2015)

**INTERNATIONAL SEARCH REPORT**

Information on patent family members

International application No.

PCT/JP2021/021103

| Patent Documents referred in the Report | Publication Date | Patent Family | Publication Date |
|---|---|---|---|
| JP 2-217231 A | 30 Aug. 1990 | (Family: none) | |
| JP 5-138785 A | 08 Jun. 1993 | US 5288547 A claims, examples, fig. 1, 2, columns 3, 4 GB 9101691 A EP 496518 A1 NO 301020 B ES 2108085 T AT 156160 T IE 920216 A | |
| JP 2014-043536 A | 13 Mar. 2014 | (Family: none) | |
| JP 2006-198784 A | 03 Aug. 2006 | (Family: none) | |
| JP 2008-050598 A | 06 Mar. 2008 | (Family: none) | |
| JP 2-305860 A | 19 Dec. 1990 | US 5476908 A claims EP 382575 A2 KR 10-1990-0013023 A | |
| JP 2002-088259 A | 27 Mar. 2002 | (Family: none) | |

Form PCT/ISA/210 (patent family annex) (January 2015)

**REFERENCES CITED IN THE DESCRIPTION**

**Patent documents cited in the description**

- WO 2004060658 A
- JP 2006198784 A
- JP 2020096946 A